# EUROPÄISCHE PATENTANMELDUNG

(11) **EP 2 080 646 A2**
(43) Veröffentlichungstag der Anmeldung: **22.07.2009**
(21) Anmeldenummer: 08018453.4
(22) Anmeldetag: 22.10.2008
(51) Int. Cl.: B60F 1/00, B61F 9/00

(54) **Schienenfahreinrichtung, Fahrzeug mit einer solchen Schienenfahreinrichtung sowie Verfahren zur Vermeidung des Kippens und/or Entgleisens eines mit einer Schienenfahreinrichtung ausgerüsteten Fahrzeugs**

(30) Priorität: 16.01.2008 DE 102008004717; 24.04.2008 DE 102008020401
(71) Anmelder: SBZ Schörling-Brock Zweiwegetechnik GmbH, 30989 Gehrden (DE)
(72) Erfinder: Peters, Manfred, 30880 Laatzen (DE); Struß, Carlo, 30974 Wennigsen (DE)
(74) Vertreter: Körner, Andreas

(57) **Zusammenfassung**

Die Erfindung betrifft eine Schienenfahreinrichtung (10) mit Schienenlaufrädern (12) für ein Fahrzeug, vorzugsweise für ein Zweiwegefahrzeug. Erfindungsgemäß sind Messeinrichtungen (14) zur aktuellen Lasterfassung vorgesehen und derart angeordnet, dass die auf jedes Schienenlaufrad (12) wirkende Last erfassbar ist.

## Beschreibung

Die Erfindung betrifft eine Schienenfahreinrichtung mit Schienenlaufrädern für ein Fahrzeug, vorzugsweise für ein Zweiwegefahrzeug.

Zweiwegefahrzeuge, die auch als Mehrwegefahrzeuge bezeichnet werden, sind Fahrzeuge, die sowohl auf der Straße, als auch auf Gleisen fahren können.

Beim Fahren dieser Fahrzeuge auf den Schienen gibt es prinzipiell zwei Möglichkeiten. Zum einen gibt es Fahrzeuge mit Schienenführungseinrichtungen. Hierbei dienen die für das Befahren der Straße vorhandenen Gummireifen auch der Fahrt auf den Schienen, jedoch sind zur Spurhaltung zusätzlich separate Führungsrollen vorhanden. Der Antrieb erfolgt auf Gleisen ebenso wie auf der Straße über die Gummireifen. Zum anderen gibt es Fahrzeuge mit Schienenfahreinrichtungen. Hierbei fahren die vorhandenen Reifen nicht auf den Schienen. Stattdessen wird auf gesondert angetriebenen Schienenlaufrädern mit Spurkranz gefahren.

Fahrzeuge der vorgenannten Art sind zumeist mit Spezialaufbauten versehene Bau-, Reparatur- und Wartungsfahrzeuge. Diese Spezialaufbauten können während ihres Betriebes zu einer Schwerpunktverlagerung des Fahrzeugs führen, wobei ein Kippmoment um die Längs- und/oder Querachse entstehen kann. Das Kippmoment um die Längsachse gefährdet die Standsicherheit und bei teilweiser Entlastung von einzelnen Schienenrädern auch die Sicherheit gegen Entgleisen. Letzteres gilt auch für ein Kippmoment um die Querachse.

Der Erfindung liegt daher die Aufgabe zugrunde, die Schienenfahreinrichtung eines Fahrzeugs, vorzugsweise eines Zweiwegefahrzeugs, derart weiterzuentwickeln, dass die Standsicherheit und/oder Sicherheit gegen Entgleisen verbessert wird, sowie ein sicheres Verfahren zur Vermeidung des Kippens und/oder Entgleisens eines mit einer Schienenfahreinrichtung ausgerüsteten Fahrzeugs zur Verfügung zu stellen.

Diese Aufgabe wird durch die kennzeichnenden Merkmale des Anspruchs 1 in Verbindung mit den Merkmalen des Oberbegriffs gelöst. Weiterbildungen und vorteilhafte Ausgestaltungen der Erfindung ergeben sich aus den jeweiligen Unteransprüchen.

Erfindungsgemäß sind bei einer Schienenfahreinrichtung nach dem Oberbegriff des Anspruchs 1 Messeinrichtungen zur aktuellen Lasterfassung vorgesehen und derart angeordnet, dass die auf jedes Schienenlaufrad wirkende Last erfassbar ist.

Aus den erfassten Lastsignalen lässt sich erfindungsgemäß eine sehr genaue Aussage über das Lastmoment bzw. das Kippmoment sowie über die Sicherheit gegen Entgleisen des Fahrzeugs machen. Durch Vergleich mit vorgegebenen Sollwerten können Maßnahmen eingeleitet werden, die ein Kippen und/oder Entgleisen des Fahrzeugs verhindern. Hierzu können die erfassten Messgrößen als Abschaltgrößen bewertet werden. Somit werden die Standsicherheit und die Sicherheit gegen Entgleisen der mit den Schienenfahreinrichtungen ausgerüsteten Fahrzeuge gewährleistet.

Der Erfindung liegt die Erkenntnis zugrunde, dass ein Aufbau, beispielsweise ein Kran oder eine Hubarbeitsbühne, zwar mittels eigener Steuerungseinrichtung ein Kippmoment, das bei dessen Betrieb entsteht, errechnen kann, jedoch die Belastungssituation an den Schienenrädern aufgrund diverser Faktoren nicht direkt auf die Verteilung der Radlasten übertragbar ist. Dies ist insbesondere auf das nicht starre Verhalten des Fahrzeug- und Hilfsrahmens zurückzuführen. Der Ladekran oder die Hubarbeitsbühne arbeiten tatsächlich nicht - wie idealerweise gewünscht und in üblichen Standsicherheitsberechnungen angenommen - hinsichtlich des Kippmomentes senkrecht zur Fahrzeuglängsachse und horizontal, sondern in verschiedensten Winkeln im Raum zu den Fahrzeugachsen (X, Y, Z-Achse). Mit anderen Worten: Es gibt Zwischenpositionen des Ladekrans oder der Hubarbeitsbühne, welche die Schienräder unterschiedlich belasten. Die vorgenannten Achsenbezeichnungen beziehen sich auf das allgemeine Fahrzeugkoordinatensystem, wie es allgemein üblich für die Beschreibung der Fahrdynamik verwendet wird.

Der Erfindung liegt weiterhin die Erkenntnis zugrunde, dass bei einem Kombinationsbetrieb von Aufbauten, beispielsweise von Hubarbeitsbühne und Ladekran, jedes Aufbau-System für sich einen Grenzwert, insbesondere einen maximalen Kippmoment, einhalten muss.

Weiterhin liegt der Erfindung die Erkenntnis zugrunde, dass selbst, wenn beide Aufbau-Systeme miteinander kommunizieren, also das jeweils errechnete Kippmoment austauschen und/oder einem Zentralrechner zuführen, der eine Abschaltentscheidung trifft, die sich tatsächlich einstellende Radlastsituation nicht erhalten wird. Berechnung und Realität stimmen mit anderen Worten nicht überein und könnten allenfalls nur aufwendig rechnerisch abgebildet werden. Dies ist - wie bereits gesagt - insbesondere darauf zurückzuführen, dass vorhandene Stahlkonstruktionen, insbesondere des Fahrzeughilfsrahmens, der am Fahrzeug angeordneten Schienenfahreinrichtung und/oder dergleichen, verschiedene Elastizitäten aufweisen.

Durch die erfindungsgemäße Schienenfahreinrichtung wird nun erstmals eine flexible Nutzung von verschiedenen auf dem Fahrzeug vorhandenen Aufbauten, beispielsweise von Kran und Hubarbeitsbühne, oder auch von nur einem auf dem Fahrzeug vorhanden Aufbau, beispielsweise einer Hubarbeitsbühne mit verschiedenen Korblasten, ermöglicht.

Eine erfindungsgemäße Schienenfahreinrichtung mit einer Kraftmessung im Bereich der Schienenräder wird insbesondere durch eine Weiterbildung der Erfindung erreicht, bei der die Messeinrichtung an der Schienenlaufradaufhängung angeordnet ist. Vorzugsweise ist die Messeinrichtung an den tragenden Teilen der Schienenfahreinrichtung angeordnet.

Bei den üblicherweise für Zweiwegefahrzeuge verwendeten Schienenfahreinrichtungen weist diese bzw. die zum Hilfsrahmen des Fahrzeugs führende mechanische Anbindung jeweils rechts und links der Fahrzeuglängsachse pro Anbindung eine Lastmesseinrichtung auf.

Bei den üblicherweise für Zweiwegefahrzeuge verwendeten Schienenfahreinrichtungen hat es sich als besonders vorteilhaft herausgestellt, wenn die Messeinrichtung am Schwenkarm der Schienenfahreinrichtung angeordnet ist. Derartige Schwenkarme sind üblicherweise schwenkbar oder linear verschiebbar oder teleskopierbar an ihrer einen Seite am Hilfsrahmen des Fahrzeugs gelagert oder befestigt und mit ihrer anderen Seite über einen geeigneten Adapter, beispielsweise einen geschlossenen Rahmen, mit dem zugehörigen Laufrad oder auch der Laufradachse verbunden.

Alternativ ist die Messeinrichtung an einer Traverse der Schienenfahreinrichtung angeordnet, welche die Schienenlaufräder aufnimmt.

Es hat sich aber auch als vorteilhaft herausgestellt, wenn die Messeinrichtung in der Radlagerung des Schienenlaufrades integriert ist.

Eine vorteilhafte Ausgestaltung der Erfindung sieht vor, dass die Messeinrichtung redundant ausgebildet ist.

Vorzugsweise ist die Messeinrichtung ein Lastmessbolzen.

Es hat sich herausgestellt, dass Lastmessbolzen sich besonders eignen, die im Bereich der Schienenlaufräder auftretenden Lastkräfte zu messen und im Bedarfsfall Alarm auszulösen oder Sicherheitsabschaltungen durchzuführen.

Als besonders vorteilhaft hat sich herausgestellt, dass hinsichtlich der Abmessungen und Bauformen die Dimensionen vorhandener Tragebolzen übernommen werden können. Die Lastmessbolzen werden also an Stelle normaler Bolzen als Konstruktionselement in der Schienenfahreinrichtung eingesetzt. Das Messsignal ist hierbei proportional zur einwirkenden Last.

Weiterhin hat sich als vorteilhaft herausgestellt, dass Lastmessbolzen intensiven, externen mechanischen und chemischen Beanspruchungen gewachsen sind und sich für Einsätze bei rauhen Umweltbedingungen eignen.

Jeder Lastmessbolzen steht gemäß einer Weiterbildung der Erfindung in Verbindung mit einem Messverstärker.

In Verbindung mit Messverstärkern lässt sich ein Lastüberwachungssystem aufbauen. Dieses kann neben der erfindungsgemäßen Lastmomentsicherung auch als Überlastsicherung verwendet werden.

Letztere ist insbesondere für Schienenreinigungsfahrzeuge mit Schmutzbehälter und Ventilator von Interesse. Durch die Messeinrichtungen kann vorteilhaft der aktuelle Beladungszustand des Schmutzbehälters des Schienenreinigungsfahrzeugs ermittelt werden. Bei Nichteinhaltung vorgegebener Grenzwerte kann durch eine Ventilatorabschaltung oder Abschaltung sonstiger Aggregate, gegebenenfalls nach Vorwarnung, eine Überladung und damit unzulässige Entlastung der Vorderachse der Schienenfahreinrichtung verhindert werden.

Eine vorteilhafte Ausgestaltung der Erfindung sieht vor, dass ein mit der Messeinrichtung in Verbindung stehendes Summier- und/oder Auswertemodul vorgesehen ist, in dem vorgegebene geometrische Daten zur Ermittlung eines Kippmoments des Fahrzeugs hinterlegt sind.

Zweckmäßigerweise ist im Summier- und/oder Auswertemodul zusätzlich oder alternativ ein minimaler Radlast-Wert hinterlegt.

Eine Weiterbildung der Erfindung sieht vor, dass eine mit dem Summier- und/oder Auswertemodul in Verbindung stehende Einrichtung zur Steuerung der Schienenfahreinrichtung und/oder zur Steuerung mindestens eines dem Fahrzeug zugeordneten Aufbaus vorgesehen ist.

Die Erfindung betrifft weiterhin ein Fahrzeug, vorzugsweise ein Zweiwegefahrzeug, das eine Schienenfahreinrichtung nach einem der Ansprüche 1 bis 10 umfasst.

Vorzugsweise ist das Fahrzeug mit mindestens einem Aufbau versehen, der bei Betrieb zu einer Schwerpunktverlagerung des Fahrzeugs führen kann.

Der Aufbau ist vorzugsweise ein Kran, eine Hubarbeitsbühne, eine selbstladende Abtrommeleinheit, ein Baggeroberteil, Schmutzbehälter oder dergleichen.

Schließlich betrifft die Erfindung noch ein Verfahren zur Vermeidung des Kippens und/oder Entgleisens eines mit einer Schienenfahreinrichtung ausgerüsteten Fahrzeugs, insbesondere eines Zweiwegefahrzeugs, welches mit mindestens einem Aufbau versehen ist, der bei Betrieb zu einer Schwerpunktverlagerung des Fahrzeugs führen kann, und umfasst erfindungsgemäß folgende Schritte:
a) aktuelle Erfassung der lastabhängigen Signale bezogen auf jedes einzelne Schienenlaufrad bzw. jedes einzelnen Schienlaufradpaares der Schienenfahreinrichtung
b) Auswertung der lastabhängigen Signale durch ein Summier- und Auswertemodul zur Ermittlung eines Lastmoments
c) Generieren eines Vorwarnsignals, wenn ein erstes vorgegebenes Lastmoment, das unterhalb des Kippmoments festgelegt ist, erreicht wird und/oder Generieren eines Abschaltsignals, wenn ein zweites vorgegebenes Lastmoment, das unterhalb des Kippmoments festgelegt ist, erreicht wird.

Eine vorteilhafte Ausgestaltung der Erfindung ist durch folgende zusätzlichen oder alternativen Schritte gekennzeichnet:
b) Auswertung jedes lastabhängigen Signals durch das Auswertemodul durch Vergleich des lastabhängigen Signals mit einem vorgegebenen minimalen Radlast-Wert
c) Generieren eines Vorwarnsignals, wenn ein erster vorgegebener minimaler Radlast-Wert unterschritten wird, und Generieren eines Abschaltsignals, wenn ein zweiter vorgegebener minimaler Radlast-Wert unterschritten wird.

Ein derartiges Abschaltsignal gewährleistet insbesondere die Sicherheit gegen Entgleisen der Schienenfahreinrichtung.

Das Abschaltsignal ist vorzugsweise ein Summenabschaltsignal, das vorzugsweise 2-kanalig ausgeführt ist.

Eine Weiterbildung sieht vor, dass das Abschaltsignal vorzugsweise über eine Steuerungseinrichtung an vorzugsweise alle Aufbauten übertragen wird.

Vorzugsweise werden beim Anliegen des Abschaltsignals nur noch lastmomentreduzierende Maßnahmen über die Steuerungseinrichtung zugelassen. Außerdem wird hierbei vorzugsweise die Maximalgeschwindigkeit des Fahrzeugs über die Steuerungseinrichtung reduziert oder der Fahrbetrieb komplett abgeschaltet.

Besonders bevorzugt wird bereits beim Anliegen des Vorwarnsignals die Maximalgeschwindigkeit des Fahrzeugs über die Steuerungseinrichtung reduziert oder der Fahrantrieb komplett abgeschaltet.

Nachfolgend wird die Erfindung anhand von Ausführungsbeispielen erläutert, die in der Zeichnung dargestellt sind. In dieser zeigen
- Fig. 1: eine schematische Darstellung einer ersten Schienenfahreinrichtung in Seitenansicht,
- Fig. 2: eine schematische Darstellung einer zweiten Schienenfahreinrichtung in Seitenansicht,
- Fig. 3: eine schematische Darstellung einer dritten Schienenfahreinrichtung in Seitenansicht,
- Fig. 4: eine schematische Darstellung einer vierten Schienenfahreinrichtung in Seitenansicht und
- Fig. 5: ein Ablaufschema des erfindungsgemäßen Verfahrens.

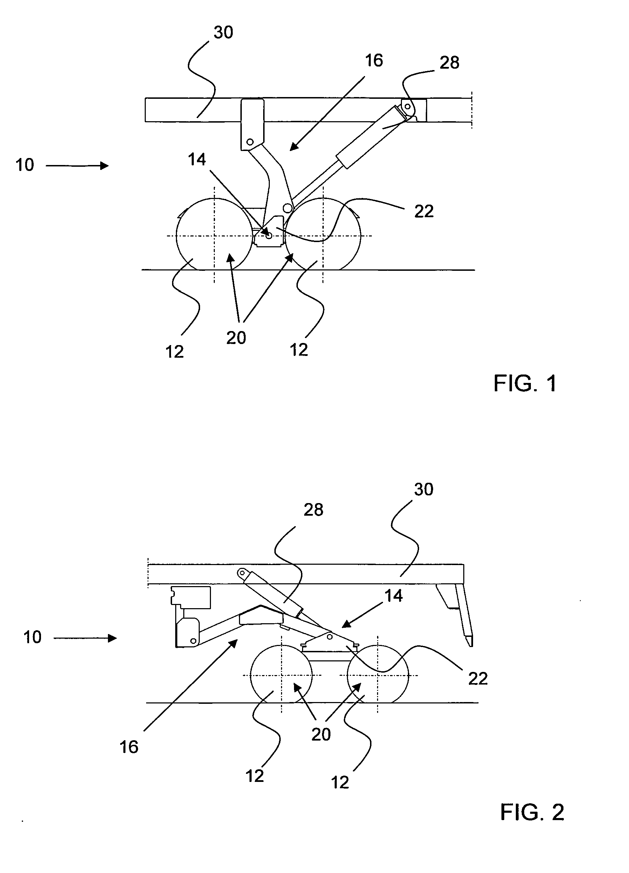

Fig. 1 bis 4 zeigen jeweils eine Ausführungsform der erfindungsgemäßen Schienenfahreinrichtung 10, wobei jeweils gleiche Bezugsziffern gleiche Bauteile beschreiben. Dabei handelt es sich um Schienenfahreinrichtungen 10 von Zweiwegefahrzeugen.

Zweiwegefahrzeuge werden auf privaten oder öffentlichen Schienennetzen beispielsweise für Gleisarbeiten, Oberleitungsmontagearbeiten oder andere Wartungs-, Reparatur- und Reinigungsarbeiten eingesetzt, und weisen zusätzlich zu ihrer Gummibereifung für herkömmliche Straßen eine Schienenfahreinrichtung 10 mit Schienenlaufrädern 12 auf, welche die Fahrzeuge dazu in die Lage versetzen, sich nach Ausfahren der Schienenlaufräder 12 entlang der Gleise des Schienennetzes fortbewegen zu können. Üblicherweise erfolgt die Umstellung auf den Schienenbetrieb dadurch, dass die Schienenlaufräder 12 über Betätigungseinrichtungen 28 in Form von Hydraulik- oder Pneumatikzylindern oder durch elektrische Betätigung ausgefahren werden und das Fahrzeug hierdurch über die Schienen angehoben wird, so dass sich die Straßenantriebsräder in der Luft befinden. Die Betätigungseinrichtungen 28 stützen sich mit ihrem einen Ende üblicherweise am Hilfsrahmen 30 des Fahrzeugs ab.

Fig. 1 zeigt eine Schienenfahreinrichtung 10 mit einem Drehgestell. Dieses ist vorzugsweise vorne am Hilfsrahmen 30 eines LKWs angeordnet. Fig. 2 zeigt eine Schienenfahreinrichtung 10 mit einem Drehgestell, welches vorzugsweise hinten am Hilfsrahmen 30 eines LKWs angeordnet ist. Erfindungsgemäß umfasst die Schienenfahreinrichtung 10 Messeinrichtungen 14 zur aktuellen Erfassung der auf jedes Schienenlaufrad 12 wirkenden Last. In Fig. 1 und 2 ist die Messeinrichtung 14 in Form eines Lastbolzens an jeweils einer Seite einer Traverse 22 der Schienenfahreinrichtung 10 angeordnet, welche die über einen Adapter und Achsen Schienenlaufräder 20 aufnimmt. Hierbei wurde der üblicherweise dort vorhandene Tragebolzen einfach nur durch den Lastmessbolzen ersetzt. Jeder Lastmessbolzen ist über einen hier nicht dargestellten Messverstärker mit einem hier ebenfalls nicht dargestellten Summier- und Auswertemodul verbunden.

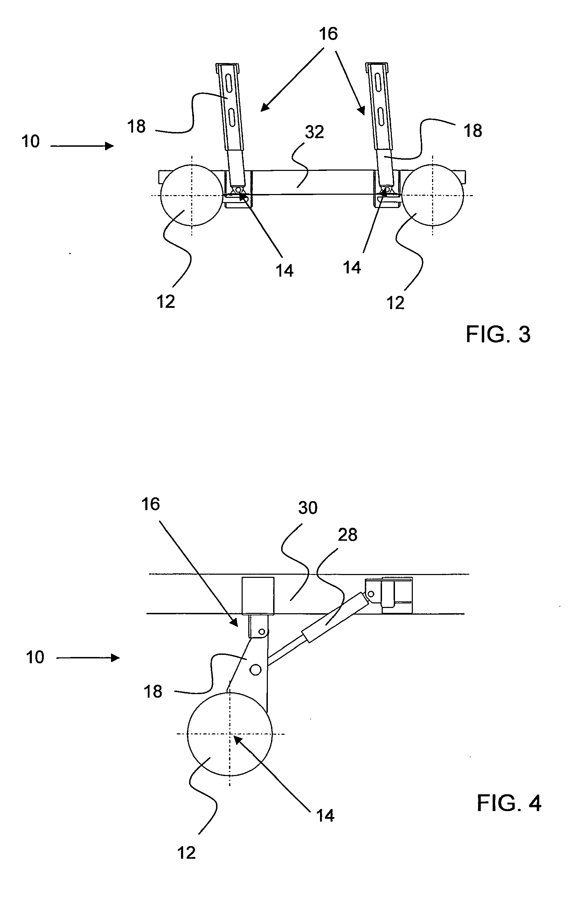

Fig. 3 zeigt eine Schienenfahreinrichtung 10 mit einer Lore. Eine solche Schienenfahreinrichtung umfasst einen geschlossenen Rahmen 32. Erfindungsgemäß ist die Messeinrichtung 14 in Form eines Lastbolzens an einem nur linear verschiebbaren Schwenkarm 18 angeordnet. Hierbei wurde der üblicherweise dort vorhandene Tragebolzen einfach nur durch einen Lastmessbolzen ersetzt.

Fig. 4 zeigt schließlich eine Schienenfahreinrichtung mit einer Schwinge. Erfindungsgemäß ist die Messeinrichtung 14 in der Radlagerung des Schienlaufrades 12 angeordnet.

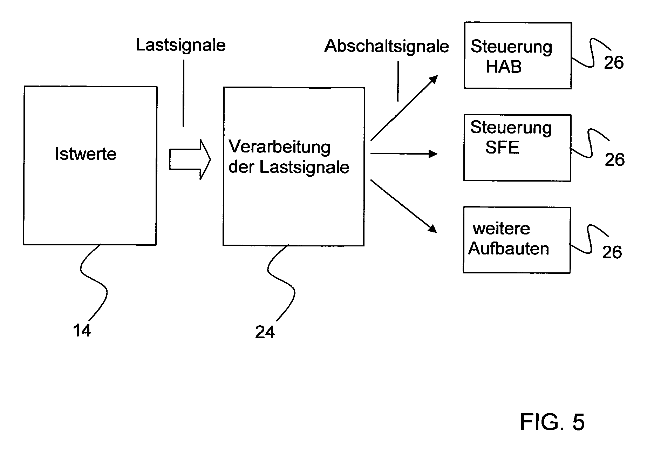

In Fig. 5 ist schließlich ein Ablaufschema des erfindungsgemäßen Verfahrens zur Vermeidung des Kippens und/oder Entgleisens eines mit einer Schienenfahreinrichtung 10 ausgerüsteten Fahrzeugs, insbesondere eines Zweiwegefahrzeugs, welches mit mindestens einem Aufbau versehen ist, der bei Betrieb zu einer Schwerpunktverlagerung des Fahrzeugs führen kann, dargestellt.

Hierbei werden mittels der vorgenannten Messeinrichtungen 14 lastabhängige Signale, bezogen auf jedes einzelne Schienenlaufrad 12, 20 der Schienenfahreinrichtung, als Istwerte erfasst. Diese Lastsignale werden dann an ein mit jeder Messeinrichtung 14 in Verbindung stehendes Summier- und Auswertemodul 24 zur Ermittlung eines Lastmoments übermittelt. Dieses Modul generiert ein Abschaltsignal, wenn ein vorgegebenes Lastmoment, das unterhalb des Kippmoments festgelegt ist, erreicht wird. Dieses Abschaltsignal wird an eine oder mehrere Steuereinrichtungen 26, hier zur Steuerung beispielsweise einer Hubarbeitsbühne HAB oder der Schienenfahreinrichtung SFE oder anderer Aufbauten, übertragen. Dadurch wird die Standsicherheit des Fahrzeugs gewährleistet.

Das Auswertemodul 24 kann auch ein Abschaltsignal generieren, wenn ein vorgegebener minimaler Radlast-Wert unterschritten wird, um so die Sicherheit gegen Entgleisen zu gewährleisten.

Beim Anliegen des Abschaltsignals werden nur noch lastmomentreduzierende Maßnahmen über die Steuerungseinrichtung 26 zugelassen. Das bedeutet, dass beispielsweise die Hubarbeitsbühne HAB nicht weiter ausgefahren werden kann. Außerdem wird vorzugsweise die Maximalgeschwindigkeit des Fahrzeugs bzw. der Schienenfahreinrichtung SFE über die Steuerungseinrichtung 26 reduziert.

Beim Anliegen oder aus Sicherheitsgründen bei Fehlen eines Abschalteingangs ist vorzugsweise kein Verfahren der Schienenfahreinrichtung mehr möglich, weil mindestens ein Rad so weit entlastet ist, dass die Gefahr der Entgleisung besteht. Aus Sicherheitsgründen sollte so vorzugsweise mit allen anliegenden Signalen verfahren werden. Wenn beispielsweise das Abschaltsignal gesetzt werden soll, so muss der Eingang von high, beispielsweise von +24V, auf low, beispielsweise auf 0V, gesetzt werden. Diese Verarbeitungsweise hat den Vorteil, dass bei Kabelbruch in einen sicheren Zustand abgeschaltet wird.

Durch die Lastmesseinrichtung 14 erfolgt eine direkte Rückmeldung über die Auswirkungen der einzelnen Bewegungen der Aufbauten hinsichtlich der einzelnen Radlasten und des Lastmoments bzw. Kippmomentes. Somit können die Arbeitsdiagramme bei Kombinationsbetrieb von Aufbauten, beispielsweise von Hubarbeitsbühne HAB und Ladekran im beispielsweise so genannten Zubringerbetrieb, dynamisch verändert werden. Eine verringerte Last am Ladekran bewirkt eine Erweiterung der Reichweite der Hubarbeitsbühne und umgekehrt.

### Bezugszeichenliste

(ist Teil der Beschreibung)
- 10: Schienenfahreinrichtung
- 12: Schienenlaufrad
- 14: Messeinrichtung
- 16: Schienlaufradaufhängung
- 18: Schwenkarm
- 20: Schienenlaufrad
- 22: Traverse
- 24: Summier- und/oder Auswertemodul
- 26: Steuerungseinrichtung
- 28: Betätigungseinrichtung
- 30: Hilfsrahmen des Fahrzeugs
- 32: Rahmen

## Patentansprüche

1. Schienenfahreinrichtung (10) mit Schienenlaufrädern (12) für ein Fahrzeug, vorzugsweise für ein Zweiwegefahrzeug, **dadurch gekennzeichnet, dass** Messeinrichtungen (14) zur aktuellen Lasterfassung vorgesehen und derart angeordnet sind, dass die auf jedes Schienenlaufrad (12) wirkende Last erfassbar ist.

2. Schienenfahreinrichtung (10) nach Anspruch 1, **dadurch gekennzeichnet, dass** die Messeinrichtung (14) an oder innerhalb der Schienenlaufradaufhängung (16) angeordnet ist.

3. Schienenfahreinrichtung (10) nach Anspruch 2, **dadurch gekennzeichnet, dass** die zum Hilfsrahmen (30) des Fahrzeugs führende mechanische Anbindung jeweils rechts und links der Fahrzeuglängsachse pro Anbindung eine Messeinrichtung (14) aufweist.

4. Schienenfahreinrichtung (10) nach einem der Ansprüche 1 bis 3, **dadurch gekennzeichnet, dass** die Messeinrichtung (14) am Schwenkarm (18) der Schienenfahreinrichtung (10) angeordnet ist.

5. Schienenfahreinrichtung (10) nach einem der Ansprüche 1 bis 3, **dadurch gekennzeichnet, dass** die Messeinrichtung (14) an einer Traverse (22) der Schienenfahreinrichtung (10) angeordnet ist, welche die Schienenlaufräder (20) aufnimmt.

6. Schienenfahreinrichtung (10) nach Anspruch 1, **dadurch gekennzeichnet, dass** die Messeinrichtung (14) in der Radlagerung des Schienenlaufrades (12) integriert ist.

7. Schienenfahreinrichtung (10) nach einem der Ansprüche 1 bis 6, **dadurch gekennzeichnet, dass** die Messeinrichtung (14) redundant ausgebildet ist.

8. Schienenfahreinrichtung (10) nach einem der Ansprüche 1 bis 7, **dadurch gekennzeichnet, dass** die Messeinrichtung (14) ein Lastmessbolzen ist.

9. Schienenfahreinrichtung (10) nach Anspruch 8, **dadurch gekennzeichnet, dass** jeder Lastmessbolzen in Verbindung mit einem Messverstärker steht.

10. Schienenfahreinrichtung (10) nach einem der Ansprüche 1 bis 9, **dadurch gekennzeichnet, dass** ein mit der Messeinrichtung (14) in Verbindung stehendes Summier- und/oder Auswertemodul (24) vorgesehen ist, in dem vorgegebene geometrische Daten zur Ermittlung eines Kippmoments des Fahrzeugs hinterlegt sind.

11. Schienenfahreinrichtung (10) nach Anspruch 10, **dadurch gekennzeichnet, dass** im Summier- und/oder Auswertemodul (24) zusätzlich oder alternativ ein minimaler Radlast-Wert hinterlegt ist.

12. Schienenfahreinrichtung (10) nach einem der Ansprüche 10 oder 11, **dadurch gekennzeichnet, dass** eine mit dem Summier- und/oder Auswertemodul (24) in Verbindung stehende Einrichtung (26) zur Steuerung der Schienenfahreinrichtung (10) und/oder zur Steuerung mindestens eines dem Fahrzeug zugeordneten Aufbaus vorgesehen ist.

13. Fahrzeug, vorzugsweise Zweiwegefahrzeug, umfassend eine Schienenfahreinrichtung (10) nach einem der Ansprüche 1 bis 12.

14. Fahrzeug nach Anspruch 13, **dadurch gekennzeichnet, dass** dieses mit mindestens einem Aufbau versehen ist, der bei Betrieb zu einer Schwerpunktverlagerung des Fahrzeugs führen kann.

15. Fahrzeug nach Anspruch 14, **dadurch gekennzeichnet, dass** der Aufbau ein Kran, eine Hubarbeitsbühne, eine selbstladende Abtrommeleinheit, ein Baggeroberteil, ein Schmutzbehälter oder dergleichen ist.

16. Verfahren zur Vermeidung des Kippens und/oder Entgleisens eines mit einer Schienenfahreinrichtung (10) ausgerüsteten Fahrzeugs, insbesondere eines Zweiwegefahrzeugs, welches mit mindestens einem Aufbau versehen ist, der bei Betrieb zu einer Schwerpunktverlagerung des Fahrzeugs führen kann, **gekennzeichnet durch** folgende Schritte:
a) aktuelle Erfassung der lastabhängigen Signale bezogen auf jedes einzelne Schienenlaufrad (12) bzw. jedes einzelnen Schienlaufradpaares (20) der Schienenfahreinrichtung (10)
b) Auswertung der lastabhängigen Signale **durch** ein Summier- und Auswertemodul (24) zur Ermittlung eines Lastmoments
c) Generieren eines Vorwarnsignals, wenn ein erstes vorgegebenes Lastmoment, das unterhalb des Kippmoments festgelegt ist, erreicht wird und/oder Generieren eines Abschaltsignals, wenn ein zweites vorgegebenes Lastmoment, das unterhalb des Kippmoments festgelegt ist, erreicht wird.

17. Verfahren nach Anspruch 16, **gekennzeichnet durch** folgende zusätzliche oder alternative Schritte:
b) Auswertung jedes lastabhängigen Signals **durch** das Auswertemodul (24) **durch** Vergleich des lastabhängigen Signals mit einem vorgegebenen minimalen Radlast-Wert
c) Generieren eines Vorwarnsignals, wenn ein erster vorgegebener minimaler Radlast-Wert unterschritten wird, und Generieren eines Abschaltsignals, wenn ein zweiter vorgegebener minimaler Radlast-Wert unterschritten wird.

18. Verfahren nach Anspruch 16 oder 17, **dadurch gekennzeichnet, dass** das Abschaltsignal vorzugsweise über eine Steuerungseinrichtung (26) an die Aufbauten übertragen wird.

19. Verfahren nach Anspruch 18, **dadurch gekennzeichnet, dass** beim Anliegen des Abschaltsignals nur noch lastmomentreduzierende Maßnahmen über die Steuerungseinrichtung (26) zugelassen werden.

20. Verfahren nach Anspruch 18, **dadurch gekennzeichnet, dass** beim Anliegen des Vorwarnsignals die Maximalgeschwindigkeit des Fahrzeugs über die Steuerungseinrichtung (26) reduziert oder der Fahrantrieb abgeschaltet wird.
